# FASCICULE DE BREVET EUROPEEN

(11) **EP 1 959 145 B1**
(45) Date de publication et mention de la délivrance du brevet: **02.08.2017**
(21) Numéro de dépôt: 08101662.8
(22) Date de dépôt: 15.02.2008
(51) Int. Cl.: F04D 27/02, F04D 29/68, F01D 5/14

(54) **Agencement de circuits de prélèvement d'air d'un étage de compresseur**
Anordnung von Luftentnahme-Schaltkreisen einer Kompressorstufe
Arrangement of air intake circuits for a compressor stage

(30) Priorité: 16.02.2007 FR 0701152
(43) Date de publication de la demande: 20.08.2008
(73) Titulaire: Safran Aircraft Engines, 75015 Paris (FR)
(72) Inventeur: Derenes, Jacky, 77550, Moissy-Cramayel (FR); Rousselin, Stéphane, 77850, Hericy (FR)
(74) Mandataire: Gevers & Orès

(56) Documents cités:
- EP-A- 1 643 136
- EP-A- 1 688 590
- US-A- 2 720 356
- US-A- 3 846 038

## Description

La présente invention se rapporte au domaine technique des compresseurs pour turboréacteurs.

Elle vise un agencement de circuits de prélèvement d'air d'un étage de compresseur d'un turboréacteur, ledit étage de compresseur comportant une roue aubagée fixe ayant des aubes fixes et une roue aubagée mobile ayant des aubes mobiles, dans lequel ledit agencement de circuits de prélèvement d'air comporte un collecteur de roue mobile destiné à collecter un écoulement d'air aspiré sur les aubes mobiles et un collecteur de roue fixe destiné à collecter un écoulement d'air aspiré sur les aubes fixes.

Elle vise également un étage d'un compresseur, notamment pour un turboréacteur, doté d'un tel agencement de circuits de prélèvement d'air.

Elle vise encore un compresseur pour un turboréacteur, doté d'un tel agencement de circuits de prélèvement d'air et/ou d'un tel étage de compresseur. Ce compresseur peut être un compresseur à haute pression ou un compresseur à basse pression.

Elle vise enfin un turboréacteur équipé d'un tel agencement de circuits de prélèvement d'air et/ou d'un tel étage de compresseur et/ou d'un tel compresseur.

Dans tout ce qui suit, les termes « axial » et « radial » correspondent respectivement à une direction axiale et à une direction radiale du turboréacteur.

De manière connue, un étage d'un compresseur de turbomachine comporte une roue aubagée mobile et une roue aubagée fixe dont les aubes respectives s'étendent entre un carter intérieur et un carter extérieur qui délimitent une veine principale dans laquelle circule un écoulement d'air principal.

Il est bien connu que le fait d'aspirer la couche limite de l'écoulement principal en un ou plusieurs emplacement(s) approprié(s) du profil des aubes mobiles et/ou fixes permet d'améliorer la situation aérodynamique d'un étage de compresseur, en améliorant le rapport de compression de cet étage de compresseur, sans détériorer son rendement, ni sa limite de décrochage. Cela permet, pour un taux de compression donné, de réduire le nombre d'étages du compresseur par rapport à un compresseur dont les profils ne sont pas aspirés.

L'homme du métier sait qu'une aspiration qui n'est effectuée que sur les aubes mobiles risque de créer une déviation importante de l'air s'écoulant dans la veine principale, et qu'il est donc préférable d'aspirer de l'air à la fois sur les aubes mobiles et sur les aubes fixes.

Un compresseur aspiré est connu, par exemple du document EP 1 643 136-A1, qui décrit un certain nombre d'agencements de compresseurs, dans lesquels il est envisagé d'aspirer de l'air sur le profil des aubes mobiles du compresseur, et aussi sur le profil des aubes fixes du compresseur.

L'air ainsi aspiré dans le compresseur est ensuite prélevé pour être utilisé dans une autre partie du turboréacteur, afin de refroidir des pièces chaudes. Le prélèvement de l'air se fait à travers le carter extérieur au moyen de collecteurs qui sont disposés à l'extérieur de la veine principale. Le document EP 1 643 136-A1 montre des collecteurs situés en regard des roues aubagées fixes des étages du compresseur.

En d'autres termes, chaque étage du compresseur à haute pression est associé à deux collecteurs disposés autour du carter extérieur de la veine principale, l'un de ces collecteurs recueillant l'air prélevé sur les aubes mobiles, et l'autre recueillant l'air prélevé sur les aubes fixes. Chacun de ces collecteurs est aussi associé à des conduits qui conduisent l'air prélevé à des emplacements souhaités dans le turboréacteur.

Pour certaines architectures de turboréacteur, la périphérie du compresseur à haute pression est aussi un lieu très recherché pour loger des accessoires et/ou des équipements du turboréacteur. Par exemple, dans certaines configurations, les aubes fixes sont fixes dans une position qui est réglable au moyen d'un système à calage variable. Typiquement un système à calage variable comporte un pivot associé à chaque aube fixe d'un étage du compresseur, chaque pivot étant disposé en traversant le carter extérieur, et chaque pivot étant entraîné en rotation au moyen d'une biellette. Toutes les biellettes sont reliées à un mécanisme de commande commun, tel qu'un anneau de commande, dont le déplacement fait basculer toutes les biellettes à l'unisson. En présence d'un tel système à calage variable sur le carter extérieur, en regard de la roue aubagée fixe, il n'est pas toujours possible de placer, de surcroît, un collecteur de prélèvement d'air.

L'invention a pour but de remédier à cet inconvénient et propose une architecture adaptée qui permette de placer à la fois des équipements de fonctionnement, tels que par exemple les systèmes à calage variable, et des moyens de prélèvement d'air tels que les collecteurs et leurs conduits associés, tout en respectant un encombrement réduit.

Selon un premier aspect, l'invention se rapporte à un agencement de circuits de prélèvement d'air d'un étage de compresseur d'un turboréacteur tel que caractérisé dans la revendication principale,

Selon une caractéristique de l'invention, ledit agencement de circuits comporte des tubes de liaison qui relient chacun la périphérie de l'étage de compresseur en regard de la roue fixe au collecteur de roue fixe. En outre, ledit collecteur de roue fixe comporte des orifices de liaison dans lesquels se raccordent lesdits tubes de liaison.

De préférence, ledit premier trajet d'écoulement comporte un premier tronçon de conduit de ladite pièce d'adaptation et ledit deuxième trajet d'écoulement comporte un deuxième tronçon de conduit de ladite pièce d'adaptation.

Selon l'invention, lesdits premier tronçon de conduit et deuxième tronçon de conduit ont des directions respectives qui se croisent. En particulier, lesdits premier tronçon de conduit et deuxième tronçon de conduit ont des directions qui se croisent de manière sensiblement perpendiculaire. Par exemple, ledit premier tronçon de conduit a une direction parallèle à celle du collecteur de roue mobile et ledit deuxième tronçon de conduit a une direction sensiblement radiale.

Selon une caractéristique de l'invention, ledit premier tronçon de conduit traverse ledit deuxième tronçon de conduit.

Selon une forme particulière de l'invention, lesdits premier tronçon de conduit, deuxième tronçon de conduit et troisième tronçon de conduit s'étendent suivant des directions deux à deux perpendiculaires.

Selon une caractéristique additionnelle, ledit tronçon de conduit comporte, en outre, une troisième tronçon de conduit de ladite pièce d'adaptation.

Selon une caractéristique de l'invention, ladite pièce d'adaptation comporte, en outre, des moyens de raccord pour son raccord à d'autres éléments dudit agencement de circuits. Par exemple, lesdits moyens de raccord comportent un filetage d'une extrémité du premier tronçon de conduit. Par exemple, lesdits moyens de raccord comportent une platine de fixation d'une extrémité du premier tronçon de conduit. Par exemple, lesdits moyens de raccord comportent des dimensions spécifiques des extrémités du deuxième tronçon de conduit, qui autorisent un engagement à force de chacune desdites extrémités dans le collecteur de roue fixe. Egalement, lesdits moyens de raccord comportent le troisième tronçon de conduit.

Selon un deuxième aspect, l'invention se rapporte à un étage de compresseur, notamment pour un compresseur à haute pression d'un turboréacteur, qui comporte un agencement de circuits de prélèvement d'air selon le premier aspect.

Selon un troisième aspect, l'invention se rapporte à un compresseur, notamment compresseur pour un turboréacteur, qui comporte au moins un étage de compresseur selon le deuxième aspect et/ou au moins un agencement de circuits de prélèvement d'air selon le premier aspect.

Selon un quatrième aspect, l'invention se rapporte à un turboréacteur, qui comporte un compresseur selon le troisième aspect et/ou au moins un étage de compresseur selon le deuxième aspect et/ou au moins un agencement de circuits de prélèvement d'air selon le premier aspect.

L'invention sera mieux comprise à la lecture de la description détaillée qui va suivre, d'un mode de réalisation particulier de l'invention, fourni à titre indicatif et nullement limitatif, et illustré au moyen des dessins annexés, dans lesquels :
- la figure 1 montre, en coupe axiale, un turboréacteur comportant un compresseur à haute pression doté d'un agencement de circuits de prélèvement d'air selon l'invention ;
- la figure 2 représente, en coupe axiale et de manière schématique, un étage de compresseur à haute pression, ainsi qu'une pièce d'adaptation de l'agencement de circuits de prélèvement d'air selon l'invention ;
- la figure 3 représente, en perspective et à plus grande échelle une pièce d'adaptation de l'agencement de circuits de prélèvement d'air selon l'invention ;
- la figure 4 est une vue en perspective de la périphérie du compresseur à haute pression montrant un agencement de circuits de prélèvement d'air d'un étage de compresseur ; et
- la figure 5 est une autre vue en perspective, à plus grande échelle, d'un détail de la figure 4, la pièce d'adaptation étant vue partiellement en arraché.

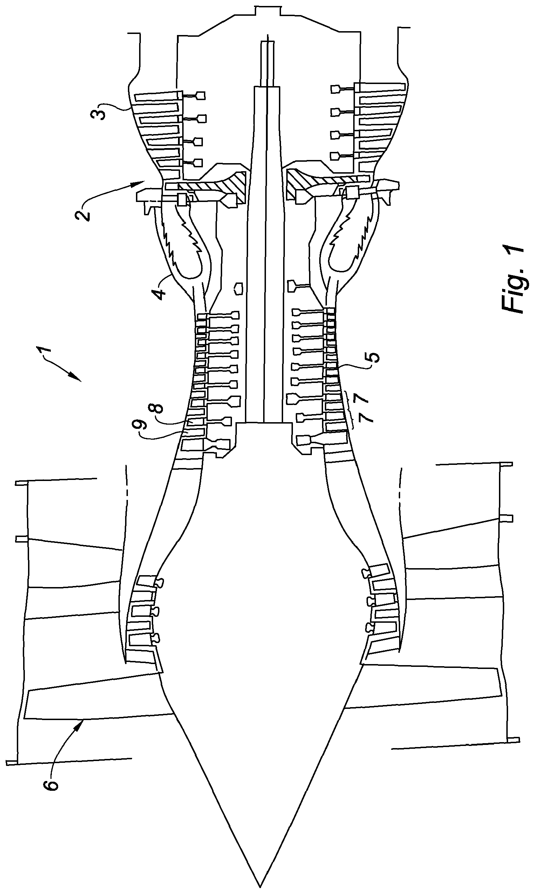

En se référant tout d'abord à la figure 1, il est représenté de manière schématique un turboréacteur 1, comportant une turbine à haute pression 2, une turbine à basse pression 3, une chambre de combustion 4, un compresseur à haute pression 5, une soufflante 6. Le compresseur à haute pression 5 est formé d'un certain nombre d'étages de compresseur 7 comportant chacun des aubes mobiles 8 et des aubes fixes 9.

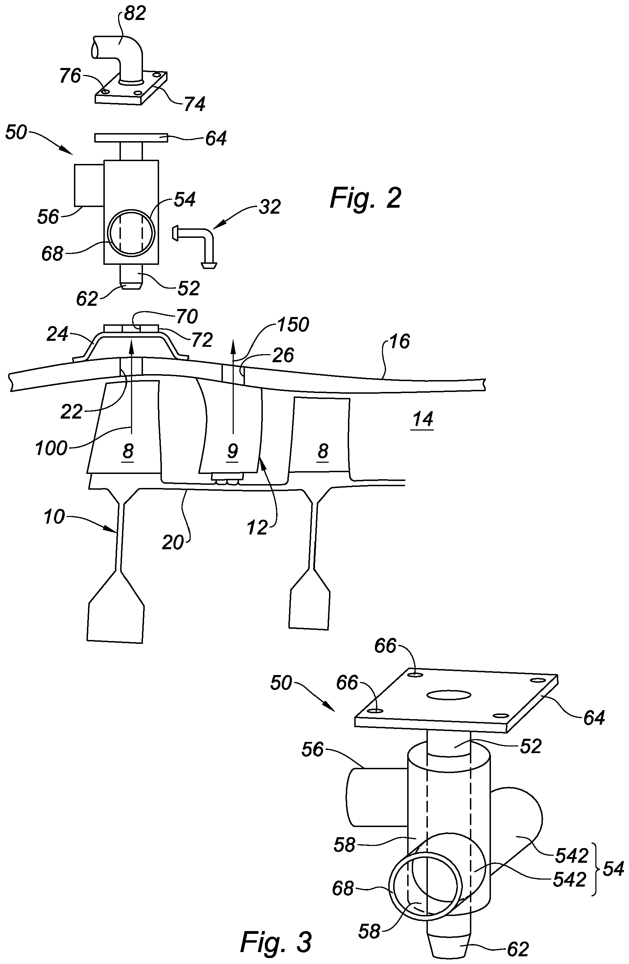

En se référant à la figure 2, il est représenté, de manière schématique et à plus grande échelle, un étage de compresseur 7 comprenant une roue mobile 10 comportant des aubes mobiles 8 et une roue fixe 12 comportant des aubes fixes 9. Les aubes mobiles 8 et les aubes fixes 9 s'étendent de manière alternée dans une veine principale 14 délimitée par un carter intérieur (non représenté) et par un carter extérieur 16. Les aubes fixes 9 sont fixées audit carter extérieur 16 tandis que les aubes mobiles 8 sont portées par des disques 18 des roues mobiles 10, lesquels disques 18 sont reliés entre eux par des viroles 20.

Le compresseur à haute pression 5 est un compresseur aspiré. En d'autres termes, de l'air est aspiré sur le profil des aubes mobiles 8 et sur le profil des aubes fixes 9, pour chaque étage de compresseur 7. A cet effet, chaque aube mobile 8 et chaque aube fixe 9 est traversée par des canaux qui aspirent de l'air sur sa surface et l'entraîne vers une extrémité de ladite aube 8, 9, ladite extrémité étant la tête d'aube pour l'aube mobile 8 et le sommet d'aube pour l'aube fixe 9.

En regard de la roue mobile 10, le carter extérieur 16 est doté de premiers orifices de prélèvement 22. Sur la périphérie extérieure du compresseur 5, et en regard de la roue mobile 10, le carter extérieur 16 porte un collecteur de roue mobile 24 dans lequel débouchent lesdits premiers orifices de prélèvement 22. L'air aspiré sur les aubes mobiles 8 est directement prélevé dans le collecteur de roue mobile 24 à travers lesdits premiers orifices de prélèvement 22, comme indiqué par la flèche 100.

En regard de la roue fixe 12, le carter extérieur 16 est doté de deuxièmes orifices de prélèvement 26. L'air aspiré sur les aubes fixes 9 est prélevé à travers lesdits deuxièmes orifices de prélèvement 26, comme indiqué par la flèche 150, dans un collecteur de roue fixe 28 qui n'est pas représenté à la figure 2.

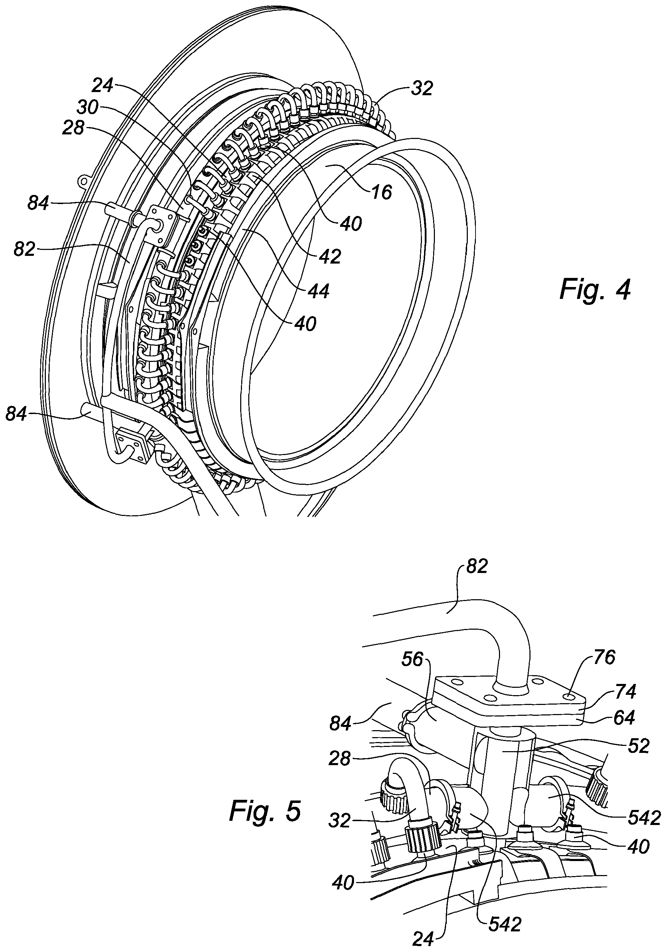

La figure 4 illustre de manière plus réaliste et en perspective la périphérie extérieure du carter extérieur 16 d'un étage de compresseur 7.

Sur cette périphérie extérieure du carter extérieur 16 apparaissent les systèmes à calage variable associés à chaque aube fixe 9. Chaque système à calage variable comporte un pivot 40 fixé au pied de ladite aube fixe 9 et qui est logé dans un trou traversant du carter extérieur 16. Le système à calage variable associé à ladite aube fixe 9 comporte également une biellette 42 dont une extrémité est reçue sur le pivot 40 et dont l'autre extrémité est articulée sur un anneau de commande commun 44. Cet anneau de commande 40 est disposé sur la périphérie extérieure du carter extérieur 16, à proximité des pivots 40 associés aux aubes fixes 9. Cet anneau de commande 44 commun est apte à se déplacer en rotation sur le carter extérieur 16 entre deux positions extrêmes. Un déplacement rotatif de cet anneau de commande 40 commun entraîne toutes les biellettes 42 qui à leur tour agissent sur les pivots 40 de manière à orienter l'ensemble des aubes fixes 9 de la même manière.

Les pivots 40 sont des pièces creuses traversées par un conduit qui met en communication l'intérieur de chaque aube fixe 9 avec l'extérieur du carter extérieur 16.

Sur la périphérie du carter extérieur 16 et en regard de la roue mobile 10 apparaît le collecteur de roue mobile 24. Le collecteur de roue fixe 28 apparaît en étant superposé audit collecteur de roue mobile 24, lesdits deux collecteurs 24, 28 étant sensiblement alignés suivant une direction radiale.

Le collecteur de roue fixe 28 est doté d'orifices de liaison 30 dans chacun desquels vient se loger de manière étanche une extrémité d'un tube de liaison 32. L'autre extrémité dudit tube de liaison 32 est raccordée de manière étanche sur le pivot 40 du système à calage variable d'une aube fixe 9. Ainsi, l'air prélevé dans les aubes fixes 9 est collecté dans le collecteur de roue fixe 28 par l'intermédiaire desdits tubes de liaison 32.

L'agencement de circuits de prélèvement d'air selon l'invention comporte le collecteur de roue mobile 24 et le collecteur de roue fixe 28, lesdits collecteurs 24, 28 étant superposés l'un à l'autre. Chacun desdits collecteurs 24, 28 se présente sensiblement sous la forme d'un tube annulaire disposé concentriquement au carter extérieur 16.

Du fait de la présence du collecteur de roue fixe 28 superposé au collecteur de roue mobile 24, il n'est pas aisé de raccorder sur le collecteur de roue fixe 24 des tuyaux de transport de l'air prélevé vers d'autres parties du turboréacteur. L'agencement de circuits de prélèvement d'air comporte une ou plusieurs pièce(s) d'adaptation 50 qui permet(tent) de surmonter cet inconvénient.

Une telle pièce d'adaptation 50 est représentée de manière isolée en vue de face à la figure 2 et en perspective à la figure 3, et représentée installée dans l'agencement de circuits de prélèvement d'air, en perspective à la figure 5. Elle comporte un premier tronçon de conduit 52, un deuxième tronçon de conduit 54 et un troisième tronçon de conduit 56. De préférence, le premier tronçon de conduit 52 et le deuxième tronçon de conduit 54 s'étendent suivant des directions respectives qui se croisent. Sur l'exemple illustré aux figures, lesdites directions se croisent de manière perpendiculaire.

Le premier tronçon de conduit 52 constitue un premier trajet d'écoulement de l'air prélevé sur les aubes mobiles 8. Le deuxième tronçon de conduit 54 et le troisième tronçon de conduit 56 constituent un trajet circuit d'écoulement de l'air prélevé sur les aubes fixes 9. Les deux trajets d'écoulement permettent de faire circuler, à l'intérieur de la pièce d'adaptation 50, les deux écoulements d'air prélevés respectivement sur les aubes mobiles 8 et sur les aubes fixes 9, sans que ces deux écoulements ne se mélangent, et de telle manière que la pièce d'adaptation 50 soit d'un encombrement le plus réduit possible.

Une particularité de la pièce d'adaptation 50 est illustrée plus particulièrement aux figures 3 et 5. La figure 5 montre l'intérieur de la pièce d'adaptation 50, une partie de celle-ci étant arrachée. Cette particularité réside dans le fait que le premier tronçon de conduit 52 traverse le deuxième tronçon de conduit 54. A cet effet, le diamètre extérieur du premier tronçon de conduit 52 est inférieur au diamètre intérieur du deuxième tronçon de conduit 54. Ainsi, l'écoulement d'air prélevé dans le collecteur de roue fixe 28 qui circule dans le deuxième tronçon de conduit 54 de la pièce d'adaptation 50 y contourne le premier tronçon de conduit 52 qui traverse ledit deuxième tronçon de conduit 54.

Plus particulièrement, comme le montre la figure 3, la pièce d'adaptation 50 comporte un corps 58 fermé et sensiblement cylindrique et s'étendant autour du première tronçon de conduit 52. Le deuxième tronçon de conduit 54 se répartit en deux moitiés 542, 542 de deuxième tronçon 54 qui se raccordent de part et d'autre dudit corps 58. Le troisième tronçon de conduit 56 se raccorde également sur ledit corps 58, au même niveau ou à un autre niveau que les deux moitiés 542, 542 de deuxième tronçon de conduit 54.

Ladite pièce d'adaptation 50 comporte, en outre, des moyens de raccord 62, 64, 68, 56, pour son raccord aux autres éléments de l'agencement de circuits de prélèvement d'air. Plus précisément, elle comporte :
- des premiers moyens de raccord 62, 64 pour raccorder le premier tronçon de conduit 52 au collecteur de roue mobile 24 et à un premier tuyau de transport 82 destiné à transporter vers d'autres parties du turboréacteur 1 l'air prélevé sur les aubes mobiles 8,
- des deuxièmes moyens de raccord 68, 56 pour raccorder le deuxième tronçon de conduit 54 au collecteur de roue fixe 28 et à un deuxième tuyau de transport 84 destiné à transporter vers d'autres parties du turboréacteur 1 l'air prélevé sur les aubes fixes 9.

Les premiers moyens de raccord 62, 64 comportent un filetage extérieur 62 de l'une des extrémités du premier tronçon de conduit 52, apte à coopérer avec un filetage intérieur 70 d'une ouverture 72 du collecteur de roue mobile 24. Ils comportent également une platine de fixation 64 de l'autre extrémité du premier tronçon de conduit 52, apte à coopérer avec une platine de fixation 74 d'une extrémité d'un premier tuyau de transport 82. Par exemple, les deux platines de fixation 64, 74 sont fixées l'une à l'autre par une liaison vissée comme le montrent les trous 66, 76 des deux platines de fixation 64, 74, respectivement sur la figure 2 et sur la figure 3.

Les deuxièmes moyens de raccord 68, 56 comportent des dimensions spécifiques 68 des deux extrémités du deuxième tronçon de conduit 54, pour un emmanchement à force des chacune de ces deux extrémités dans une section du collecteur de roue fixe 28. Ils comportent également le troisième tronçon de conduit 56, pour un raccord du deuxième tronçon de conduit 54 sur le deuxième tuyau de transport d'air 64. Ce troisième tronçon de conduit 56 est, par exemple, doté à cet effet d'un écrou fileté (non représenté).

Avec un agencement de circuits de prélèvement d'air selon l'invention, l'air aspiré sur les aubes mobiles 8 est directement prélevé dans le collecteur de roue mobile 24 et s'écoule à travers le premier tronçon de conduit 52 avant d'être évacué vers un premier tuyau de transport 82 puis vers d'autre parties du turboréacteur 1. Par ailleurs, l'air aspiré sur les aubes fixes 9 est prélevé dans le collecteur de roue fixe 28 par l'intermédiaire des tubes de liaison 32, et s'écoule à travers les deux moitiés 544 de deuxième tronçon de conduit 54 avant d'être évacué par le troisième tronçon de conduit 56 vers un deuxième tuyau de transport d'air 84 puis vers d'autres parties du turboréacteur 1.

Avec un tel agencement de circuits de prélèvement d'air, dans lequel le collecteur de roue mobile 24 et le collecteur de roue fixe 28 sont superposés, et grâce à la pièce d'adaptation 50, les deux écoulements d'air prélevé respectivement sur les aubes mobiles 8 et sur les aubes fixes 9 peuvent circuler avec un encombrement réduit et sans se mélanger.

Par suite, la périphérie du carter extérieur 16 en regard de la roue fixe 12 reste disponible pour placer les éléments 40, 42, 44 des systèmes à calage variable des aubes fixes 9.

Dans un turboréacteur 1 dans lequel les aubes fixes ne seraient pas dotées d'un système à calage variable, un agencement de circuits de prélèvement d'air selon l'invention est tout aussi avantageux, car il laisse un emplacement libre qui peut servir à placer un autre équipement qu'un tel système à calage variable, car la périphérie extérieure du carter extérieur 16 est très sollicitée pour loger toutes sortes d'équipements ou d'accessoires. Dans un tel cas, les tubes de liaison 32 sont raccordés directement sur des trous traversants du carter extérieur 16, chacun de ces trous traversants étant directement reliés à l'intérieur d'une aube fixe 9.

Selon l'importance des besoins en prélèvement d'air sur les aubes mobiles 8 et sur les aubes fixes 9, l'agencement de circuits de prélèvement comporte un ou plusieurs pièces d'adaptation 50 insérées dans le collecteur de roue fixe 28.

L'invention n'est pas limitée au mode de réalisation qui vient d'être décrit. Par exemple, on pourrait envisager une pièce d'adaptation 50 dont le premier tronçon de conduit 52 et le deuxième tronçon de conduit 54 se croisent de manière non perpendiculaire.

## Revendications

1. Agencement de circuits de prélèvement d'air d'un étage de compresseur (7) d'un turboréacteur (1), ledit étage de compresseur (7) comportant une roue aubagée mobile (10) ayant des aubes mobiles (8) et une roue aubagée fixe (12) ayant des aubes fixes (9)ledit agencement de circuits comportant un collecteur de roue mobile (24) destiné à collecter un écoulement d'air aspiré sur les aubes mobiles (8) et un collecteur de roue fixe (28) destiné à collecter un écoulement d'air aspiré sur les aubes fixes (9), **caractérisé**
**en ce que** ledit collecteur de roue mobile (24) est disposé sur la périphérie dudit étage de compresseur (7) en regard de ladite roue mobile (10) et ledit collecteur de roue fixe (28) est superposé audit collecteur de roue mobile (24) et **en ce qu'**il comprend au moins une pièce d'adaptation (50), qui comporte un premier trajet d'écoulement de l'air aspiré sur les aubes mobiles (8) et un deuxième trajet d'écoulement de l'air aspiré sur les aubes fixes (9), lesdits premier et deuxième trajets d'écoulement étant agencés de manière à permettre aux deux écoulements d'air de circuler avec un encombrement réduit de la pièce d'adaptation (50)..

2. Agencement de circuits selon la revendication 1, **caractérisé en ce qu'**il comporte des tubes de liaison (32) qui relient chacun la périphérie de l'étage de compresseur (7) en regard de la roue fixe (12) au collecteur de roue fixe (28).

3. Agencement de circuits selon la revendication 2, **caractérisé en ce que** ledit collecteur de roue fixe (28) comporte des orifices de liaison (30) dans lesquels se raccordent lesdits tubes de liaison (32).

4. Agencement de circuits selon la revendication 1, **caractérisé en ce que** ledit premier trajet d'écoulement comporte un premier tronçon de conduit (52) de ladite pièce d'adaptation (50) et ledit deuxième trajet d'écoulement comporte un deuxième tronçon de conduit (54) de ladite pièce d'adaptation (50).

5. Agencement de circuits selon la revendication 4, **caractérisé en ce que** lesdits premier tronçon de conduit (52) et deuxième tronçon de conduit (54) ont des directions respectives qui se croisent.

6. Agencement de circuits selon la revendication 4 ou 5, **caractérisé en ce que** lesdits premier tronçon de conduit (52) et deuxième tronçon de conduit (54) ont des directions qui se croisent de manière sensiblement perpendiculaire.

7. Agencement de circuits selon l'une quelconque des revendications 4 à 6, **caractérisé en ce que** ledit premier tronçon de conduit (52) a une direction parallèle à celle du collecteur de roue mobile (24) et ledit deuxième tronçon de conduit (54) a une direction sensiblement radiale.

8. Agencement de circuits selon l'une quelconque des revendications 4 à 7, **caractérisé en ce que** ledit premier tronçon de conduit (52) traverse ledit deuxième tronçon de conduit (54).

9. Agencement de circuits selon l'une quelconque des revendications 4 à 8, **caractérisé en ce que** ledit deuxième trajet d'écoulement comporte, en outre, un troisième tronçon de conduit (56) de ladite pièce d'adaptation (50).

10. Agencement de circuits selon la revendication 9, **caractérisé en ce que** lesdits premier tronçon de conduit (52), deuxième tronçon de conduit (54) et troisième tronçon de conduit (56) s'étendent suivant des directions deux à deux perpendiculaires.

11. Agencement de circuits selon l'une quelconque des revendications 4 à 10, **caractérisée en ce que** ladite pièce d'adaptation (50) comporte, en outre, des moyens de raccord (62, 64, 68, 56) pour son raccord à d'autres éléments dudit agencement de circuits.

12. Agencement de circuits selon la revendication 11, **caractérisé en ce que** lesdits moyens de raccord (62, 64, 68, 56) comportent un filetage (62) d'une extrémité du premier tronçon de conduit (52).

13. Agencement de circuits selon la revendication 11 ou 12, **caractérisé en ce que** lesdits moyens de raccord (62, 64, 68, 56) comportent une platine de fixation (64) d'une extrémité du premier tronçon de conduit (52).

14. Agencement de circuits selon l'une quelconque des revendications 11 à 13, **caractérisé en ce que** lesdits moyens de raccord (62, 64, 68, 56) comportent des dimensions spécifiques (68) des extrémités du deuxième tronçon de conduit (54), qui autorisent un engagement à force de chacune desdites extrémités dans le collecteur de roue fixe (28).

15. Agencement de circuits selon l'une quelconque des revendications 11 à 14 et la revendication 9, **caractérisé en ce que** lesdits moyens de raccord (62, 64, 68, 56) comportent le troisième tronçon de conduit (56).

16. Etage de compresseur (7), notamment pour un compresseur (5) d'un turboréacteur (1), **caractérisé en ce qu'**il comporte un agencement de circuits de prélèvement d'air selon l'une quelconque des revendications 1 à 15.

17. Compresseur (5), notamment compresseur pour un turboréacteur (1), **caractérisé en ce qu'**il comporte au moins un étage de compresseur (7) selon la revendication 16 et/ou au moins un agencement de circuits de prélèvement d'air selon l'une quelconque des revendications 1 à 15.

18. Turboréacteur (1), **caractérisé en ce qu'**il comporte un compresseur selon la revendication 17 et/ou au moins un étage de compresseur (7) selon la revendication 16 et/ou au moins un agencement de circuits de prélèvement d'air selon l'une quelconque des revendications 1 à 15.

## Patentansprüche

1. Anordnung von Schaltungen zur Entnahme von Luft einer Kompressorstufe (7) eines Turbotriebwerkes (1), wobei die Kompressorstufe (7) ein bewegliches beschaufeltes Laufrad (10), das bewegliche Schaufeln (8) hat, und ein feststehendes beschaufeltes Rad (12) aufweist, das feststehende Schaufeln (9) hat, wobei die Anordnung von Schaltungen einen Verteiler mit beweglichem Rad (24), der dazu bestimmt ist, eine Strömung von angesaugter Luft auf die beweglichen Schaufeln (8) zu sammeln, und einen Verteiler mit feststehendem Rad (28) aufweist, der dazu bestimmt ist, eine Strömung von angesaugter Luft auf die feststehenden Schaufeln (9) zu sammeln,
**dadurch gekennzeichnet, dass** der Verteiler mit beweglichem Rad (24) an dem Umfang der Kompressorstufe (7) zu dem mobilen Rad (10) zugewandt angeordnet ist, und dass der Verteiler mit feststehendem Rad (28) mit dem Verteiler mit beweglichen Rad (24) überlagert ist, und dass sie mindestens ein Adapterstück (50) aufweist, das einen ersten Strömungsweg von angesaugter Luft über die beweglichen Schaufeln (8) und einen zweiten Strömungsweg von angesaugter Luft über die feststehenden Schaufeln (9) umfasst, wobei der erste und der zweite Strömungsweg so angeordnet sind, dass er es zwei Luftströmungen ermöglicht, mit einer verringerten Überfüllung des Adapterstücks (50) zu zirkulieren.

2. Anordnung von Schaltungen nach Anspruch 1, **dadurch gekennzeichnet, dass** sie Verbindungsrohre (32) aufweist, die jeweils den Umfang der Kompressorstufe einer Verbindung (7) zu dem feststehenden Rad (12) zugewandt mit dem Verteiler mit feststehendem Rad (28) verbinden.

3. Anordnung von Schaltungen nach Anspruch 2, **dadurch gekennzeichnet, dass** der Verteiler mit feststehendem Rad (28) Verbindungsöffnungen (30) aufweist, an die die Verbindungsrohre (32) angeschlossen sind.

4. Anordnung von Schaltungen nach Anspruch 1, **dadurch gekennzeichnet, dass** der erste Strömungsweg einen ersten Leitungsabschnitt (52) des Adapterstücks (50) aufweist, und dass der zweite Strömungsweg einen zweiten Leitungsabschnitt (54) des Adapterstücks (50) aufweist.

5. Anordnung von Schaltungen nach Anspruch 4, **dadurch gekennzeichnet, dass** der erste Kanalabschnitt (52) und der zweite Kanalabschnitt (54) jeweilige Richtungen haben, die sich kreuzen.

6. Anordnung von Schaltungen nach Anspruch 4 oder 5, **dadurch gekennzeichnet, dass** der erste Kanalabschnitt (52) und der zweite Kanalabschnitt (54) Richtungen haben, die sich im Wesentlichen senkrecht kreuzen.

7. Anordnung von Schaltungen nach einem der Ansprüche 4 bis 6, **dadurch gekennzeichnet, dass** der erste Kanalabschnitt t (52) eine Richtung parallel zu derjenigen des Verteiler mit beweglichem Rad (24) hat, und dass der zweite Leitungsabschnitt (54) eine im Wesentlichen radiale Richtung hat.

8. Anordnung von Schaltungen nach einem der Ansprüche 4 bis 7, **dadurch gekennzeichnet, dass** der erste Kanalabschnitt (52) den zweiten Kanalabschnitt (54) kreuzt.

9. Anordnung von Schaltungen nach einem der Ansprüche 4 bis 8, **dadurch gekennzeichnet, dass** der zweite Strömungsweg ferner einen dritten Kanalabschnitt (56) des Adapterstücks (50) aufweist.

10. Anordnung von Schaltungen nach Anspruch 9, **dadurch gekennzeichnet, dass** der erste Kanalabschnitt (52), der zweite Kanalabschnitt (54) und der dritte Kanalabschnitt (56) sich entlang von Richtungen erstrecken, die jeweils senkrecht zueinander sind.

11. Anordnung von Schaltungen nach einem der Ansprüche 4 bis 10, **dadurch gekennzeichnet, dass** das Adaptersstück (50) ferner Anschlussmittel (62, 64, 68, 56) für seinen Anschluss an andere Elemente der Anordnung von Schaltungen aufweist.

12. Anordnung von Schaltungen nach Anspruch 11, **dadurch gekennzeichnet, dass** die Anschlussmittel (62, 64, 68, 56) ein Gewinde (62) eines Endes des ersten Kanalabschnitts (52) aufweisen.

13. Anordnung von Schaltungen nach Anspruch 11 oder 12, **dadurch gekennzeichnet, dass** die Anschlussmittel (62, 64, 68, 56) eine Platte zur Befestigung (64) von einem Ende des ersten Kanalabschnitts (52) aufweisen.

14. Anordnung von Schaltungen nach einem der Ansprüche 11 bis 13, **dadurch gekennzeichnet, dass** die Anschlussmittel (62, 64, 68, 56) spezifische Abmessungen (68) der Enden des zweiten Kanalabschnitts (54) aufweisen, die ein kraftschlüssigen Eingriff von jedem der Enden in den Verteiler mit feststehendem Rad (28) ermöglichen.

15. Anordnung von Schaltungen nach einem der Ansprüche 11 bis 14 und Anspruch 9, **dadurch gekennzeichnet, dass** die Anschlussmittel (62, 64, 68, 56) den dritten Leitungsabschnitt (56) aufweisen.

16. Kompressorstufe (7), insbesondere für einen Kompressor (5) eines Turbotriebwerks (1), **dadurch gekennzeichnet, dass** es eine Anordnung von Schaltungen zur Entnahme von Luft nach einem der Ansprüche 1 bis 15 umfasst.

17. Kompressor (5), insbesondere Kompressor für ein Turbotriebwerk (1), **dadurch gekennzeichnet, dass** es mindestens eine Kompressorstufe (7) nach Anspruch 16 und / oder mindestens eine Anordnung von Schaltungen zur Entnahme von Luft nach einem der Ansprüche 1 bis 15 umfasst.

18. Turbotriebwerk (1), **dadurch gekennzeichnet, dass** es einen Kompressor nach Anspruch 17 und / oder mindestens eine Kompressorstufe (7) nach Anspruch 16 und / oder mindestens eine Anordnung von Schaltungen zur Entnahme von Luft nach einem der Ansprüche 1 bis 15 aufweist.

## Claims

1. Air tapping circuit arrangement of a compressor stage (7) of a turbojet (1), said compressor stage (7) comprising a movable bladed wheel (10) having movable blades (8) and a fixed bladed wheel (12) having fixed blades (9), said circuit arrangement comprising a movable wheel manifold (24) designed to collect an air flow aspirated from the movable blades (8) and a fixed wheel manifold (28) designed to collect an air flow aspirated from the fixed blades (9),
**characterised in that** said movable wheel manifold (24) is placed on the periphery of said compressor stage (7) facing said movable wheel (10) and said fixed wheel manifold (28) is superposed on said movable wheel manifold (24), and **in that** said circuit arrangement comprises at least one adapter part (50), which comprises a first flow path for the air aspirated from the movable blades (8) and a second flow path for the air aspirated from the fixed blades (9), said first and second flow paths being arranged so as to allow the two air flows to travel with a reduced space requirement of the adapter part (50).

2. Circuit arrangement according to claim 1, **characterised in that** it comprises connecting tubes (32) that each connect the periphery of the compressor stage (7) facing the fixed wheel (12) to the fixed wheel manifold (28).

3. Circuit arrangement according to claim 2, **characterised in that** said fixed wheel manifold (28) comprises connecting orifices (30) into which said connecting tubes (32) are connected.

4. Circuit arrangement according to claim 1, **characterised in that** said first flow path comprises a first duct section (52) of said adapter part (50) and said second flow path comprises a second duct section (54) of said adapter part (50).

5. Circuit arrangement according to claim 4, **characterised in that** said first duct section (52) and second duct section (54) have respective directions that cross.

6. Circuit arrangement according to claim 4 or 5, **characterised in that** said first duct section (52) and second duct section (54) have directions that cross in a substantially perpendicular manner.

7. Circuit arrangement according to claims 4 to 6, **characterised in that** said first duct section (52) has a direction parallel to that of the movable wheel manifold (24) and said second duct section (54) has a substantially radial direction.

8. Circuit arrangement according to claims 4 to 7, **characterised in that** said first duct section (52) traverses said second duct section (54).

9. Circuit arrangement according to claims 4 to 8, **characterised in that** said second flow path also comprises a third duct section (56) of said adapter part (50).

10. Circuit arrangement according to claim 9, **characterised in that** said first duct section (52), second duct section (54) and third duct section (56) extend in directions that are perpendicular in pairs.

11. Circuit arrangement according to claims 4 to 10, **characterised in that** said adapter part (50) also comprises connection means (62, 64, 68, 56) for connecting it to other elements of said circuit arrangement.

12. Circuit arrangement according to claim 11, **characterised in that** said connection means (62, 64, 68, 56) comprise a threading (62) of one end of the first duct section (52).

13. Circuit arrangement according to claim 11 or 12, **characterised in that** said connection means (62, 64, 68, 56) comprise a plate (64) for fixing one end of the first duct section (52).

14. Circuit arrangement according to any one of claims 11 to 13, **characterised in that** said connection means (62, 64, 68, 56) comprise specific dimensions (68) of the ends of the second duct section (54) that allow a forced engagement of each of said ends in the fixed wheel manifold (28).

15. Circuit arrangement according to any one of claims 11 to 14 and claim 9, **characterised in that** said connection means (62, 64, 68, 56) comprise the third duct section (56).

16. Compressor stage (7), particularly for a compressor (5) of a turbojet (1), **characterised in that** it comprises an air tapping circuit arrangement according to any one of claims 1 to 15.

17. Compressor (5), particularly a compressor for a turbojet (1), **characterised in that** it comprises at least one compressor stage (7) according to claim 16 and/or at least one air tapping circuit arrangement according to any one of claims 1 to 15.

18. Turbojet (1), **characterised in that** it comprises a compressor according to claim 17 and/or at least one compressor stage (7) according to claim 16 and/or at least one air tapping circuit arrangement according to any one of claims 1 to 15.
